Europäisches Patentamt

European Patent Office

Office européen des brevets

(11) Veröffentlichungsnummer: **0 301 248 B1**

(12) **EUROPÄISCHE PATENTSCHRIFT**

(45) Veröffentlichungstag der Patentschrift: **11.12.91**

(51) Int. Cl.5: **G06F 11/22**, G06F 13/00, G06F 13/36

(21) Anmeldenummer: **88110206.5**

(22) Anmeldetag: **27.06.88**

(54) Datenverarbeitungsanlage mit Wartungsprozessor zur Steuerung von Wartungsoperationen und Verfahren zur Durchführung solcher Wartungsoperationen.

(30) Priorität: **30.06.87 DE 3721600**

(43) Veröffentlichungstag der Anmeldung:
**01.02.89 Patentblatt 89/05**

(45) Bekanntmachung des Hinweises auf die
Patenterteilung:
**11.12.91 Patentblatt 91/50**

(84) Benannte Vertragsstaaten:
**AT BE CH DE FR GB IT LI NL SE**

(56) Entgegenhaltungen:
**EP-A- 0 009 600**
**US-A- 3 623 011**

**IEEE 1981 IECI PROCEEDINGS, 9.-12. Novem-**
**ber 1981, San Francisco, Seiten 13-17, IEEE,**
**New York, US; C.J. TAVORA et al.: "An elec-**
**tronic nameplate prototype"**

(73) Patentinhaber: **Siemens Nixdorf Informations-**
**systeme AG**
**Otto-Hahn-Ring 6**
**W-8000 München 83(DE)**

(72) Erfinder: **Lange, Kurt**
**Therese-Giehse-Allee 46**
**W-8000 München 83(DE)**
Erfinder: **Schlimm, Georg**
**Neureuther Strasse 17**
**W-8000 München 40(DE)**

(74) Vertreter: **Fuchs, Franz-Josef, Dr.-Ing. et al**
**Postfach 22 13 17**
**W-8000 München 22(DE)**

# Beschreibung

Datenverarbeitungsanlage mit Wartungsprozessor zur Steuerung von Wartungsoperationen und Verfahren zur Durchführung solcher Wartungsoperationen

Die Erfindung betrifft Datenverarbeitungsanlagen mit mehreren Funktionseinheiten, die über gleichartige Schnittstellenanschlüsse mit einem Wartungsprozessor zur Steuerung von Wartungsoperationen verbunden sind, entsprechend dem Oberbegriff des Patentanspruches 1, sowie ein Verfahren zur Durchführung solcher Wartungsoperationen.

Eine Datenverarbeitungsanlage gemäß dem Oberbegriff des Patentanspruches 1 ist beispielsweise aus der Deutschen Patentschrift DE-C3-28 42 603 bekannt. Sie ermöglicht mit verhältnismäßig geringem Aufwand bei hoher Anpassungsfähigkeit an die Wartungsaufgaben der einzelnen Funktionseinheiten der Datenverarbeitungsanlage eine effektive Wartung durch den Wartungsprozessor.

Funktionseinheiten einer solchen Datenverarbeitungsanlage können der Hauptspeicher, Verarbeitungseinheiten und Ein-/Ausgabeeinheiten sein. Der in zunehmendem Maße modulartige Aufbau von Datenverarbeitungsanlagen hat vielfach zu einer stärkeren Gliederung einzelner Funktionseinheiten geführt. Dies gilt insbesondere für die Ein-/Ausgabeeinheiten, bei denen ein gemeinsamer Ein-/Ausgabeprozessor mit einer Reihe von Ein-/Ausgabemodulen, zum Beispiel Bytemultiplexkanälen, Blockmultiplexkanälen oder integrierten Steuerungen für Daten- oder Bandspeicher, zusammenarbeitet, die ebenfalls Prozessorsteuerungen aufweisen.

Um auch diese Ein-/Ausgabemodule für Wartungsoperationen durch den Wartungsprozessor zugänglich zu machen, müßten sie in gleicher Weise über individuelle Schnittstellenanschlüsse mit dem Wartungsprozessor verbunden werden. Die dafür benötigte Anzahl von Schnittstellenanschlüssen steht aber nicht immer zur Verfügung.

Gegenstand der Erfindung ist daher ausgehend vom Oberbegriff des Patentanspruches 1 eine Datenverarbeitungsanlage, bei der trotz begrenzter Anzahl von verfügbaren Schnittstellenanschlüssen für den Wartungsprozessor die mit einer Funktionseinheit eng zusammenarbeitenden Untereinheiten ebenfalls der direkten Steuerung durch den Wartungsprozessor zugänglich sind, um Wartungsoperationen unmittelbar ausführen zu können, sowie entsprechende Verfahren zur Durchführung der Wartungsoperationen.

Die Datenverarbeitungsanlage gemäß der Erfindung weist den durch die Merkmale des Patentanspruches 1 festgelegten Aufbau auf.

Danach wird ausgehend von der internen Schnittstelle zur zugehörigen Funktionseinheit eines Schnittstellenadapters mittels eines parallel angeschlossenen Schnittstellenumsetzers ein gesondertes, gemeinsames Wartungsleitungssystem für alle mit der zugehörigen Funktionseinheit zusammenarbeitenden Untereinheiten angesteuert. An dieses Wartungsleitungssystem sind die Untereinheiten jeweils über einen individuellen Wartungsadapter angeschlossen. Ein gesondertes Wartungsleitungssystem ist ansich bekannt aus US-A-3 623 011.

Einzelheiten über den Aufbau des Schnittstellenumsetzers und der Wartungsadapter der einzelnen Untereinheiten ergeben sich aus den Patentansprüchen 2 bis 7, wobei insbesondere durch die Ausbildung gemäß Patentanspruch 3 gesonderte Befehlsleitungen und gemäß Patentanspruch 4 zusätzliche Auswahlleitungen für die Auswahl der für eine Wartungsoperation benötigten Untereinheit vermieden werden und die Anzahl der benötigten Daten- und Steuerimpulsleitungen auf die der internen Schnittstelle zur Funktionseinheit am Schnittstellenadapter beschränkt bleibt.

Das Verfahren zur Durchführung von Wartungsoperationen gemäß der Erfindung ergibt sich aus den Merkmalen des Patentanspruches 8. Der Schnittstellenadapter wird danach in herkömmlicher Weise mit einer Befehlssendung angesteuert. Aufgrund vorgegebener Befehle, die der Befehlsdecodierer im Schnittstellenumsetzer auswerten kann, wird das Wartungsleitungssystem aktiviert und eine nachfolgende Daten- oder Leerrahmensendung über das Wartungsleitungssystem mit den zugehörigen Stroboimpulsen weitergeleitet.

Wenn gesonderte Auswahlleitungen für die einzelnen Untereinheiten vorgesehen sind, kann die Aktivierungsinformation für die jeweilige Auswahlleitung in der Befehlssendung enthalten sein.

Auf gesonderte Befehlsleitungen des Wartungsleitungssystems kann verzichtet werden, wenn gemäß Patentanspruch 9 die Steuerinformation jeweils als erste Datensendung übermittelt wird. Auch kann in diesem Falle auf gesonderte Auswahlleitungen für die einzelnen Untereinheiten verzichtet werden, da die Auswahlinformation im Rahmen der Datensendung für die Steuerinformation mitgesendet werden kann. Gemäß der Weiterbildung gemäß Patentanspruch 10 können auch zunächst mehrere vorgegebene Untereinheiten ausgewählt und aktiviert werden, bevor anschließend mit einer einzigen zweiten Befehls- und Datensendung dieselben Daten allen aktivierten Untereinheiten gleichzeitig zugeleitet werden.

Einzelheiten der Erfindung seien nachfolgend anhand eines in der Zeichnung dargestellten Ausführungsbeispieles näher erläutert.

Im einzelnen zeigen

FIG 1     ein Blockschaltbild des gemäß der Erfindung ausgebildeten Teiles einer Datenverarbeitungsanlage,

FIG 2   Ein Blockschaltbild eines Schnittstellenadapters einer Funktionseinheit mit angekoppeltem Schnittstellenumsetzer für den Anschluß eines gesonderten Wartungsleitungssystems gemäß der Erfindung,

FIG 3   ein Blockschaltbild eines Wartungsadapters in einer der Untereinheiten mit weiteren Funktionsregistern der Untereinheit und

FIG 4   ein Impulsdiagramm der Signale auf dem Wartungsleitungssystem beim Laden der Steuerregister und der übrigen Register mit Daten sowie beim Abholen von Daten aus einem der lesbaren Register.

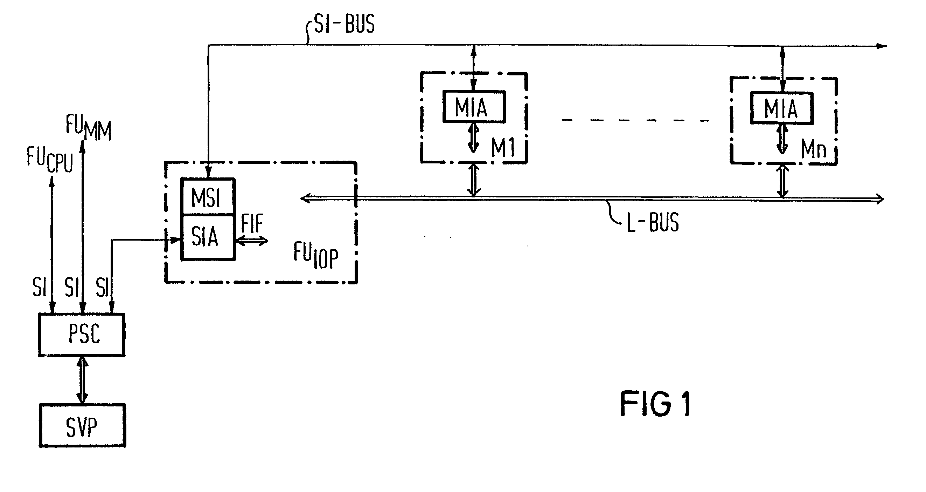

FIG 1 zeigt in Anlehnung an FIG 1 der DE-C3-28 42 603 einen Wartungsprozessor SVP, der über eine Koordinatorschaltung PSC mit den Schnittstellenanschlüssen SI Zugriff zu den einzelnen Funktionseinheiten $FU_{CPU}$, $FU_{MM}$ und $FU_{IOP}$ einer Datenverarbeitungsanlage hat. Die Schnittstellenanschlüsse SI enden in jeder der Funktionseinheiten, wie für die Funktionseinheit $FU_{IOP}$ näher dargestellt ist, in einem Schnittstellenadapter SIA, der über eine interne Schnittstelle FIF zur zugehörigen Funktionseinheit $FU_{IOP}$ Daten und Steuerinformationen mit dieser austauschen kann.

Bei der Funktionseinheit $FU_{IOP}$ handelt es sich entsprechend der EP-A1-0156989 um einen Ein-/Ausgabeprozessor mit einem Ein-/Ausgabeleitungssystem L-BUS, an das eine Reihe von Ein-/Ausgabeeinheiten M1 bis Mn als Untereinheit angeschlossen ist, die den Datenverkehr zwischen dem nicht dargestellten Hauptspeicher und nicht dargestellten angeschlossenen peripheren Geräten unterstützt vom Ein-/Ausgabeprozessor weitgehend selbständig abwickeln.

Gemäß der Erfindung ist mit dem Schnittstellenadapter SIA ein Schnittstellenumsetzer MSI für ein gesondertes Wartungsleitungssystem SI-BUS gekoppelt, an das die einzelnen Untereinheiten M1 bis Mn über individuelle Wartungsadapter MIA angeschlossen sind, so daß der Wartungsprozessor SVP über diesen verlängerten Wartungsanschluß unmittelbar mit den einzelnen Untereinheiten M1 bis Mn Daten und Steuerinformationen austauschen kann, ohne daß an der Koordinatorschaltung PSC weitere Schnittstellenanschlüsse SI vorzusehen sind.

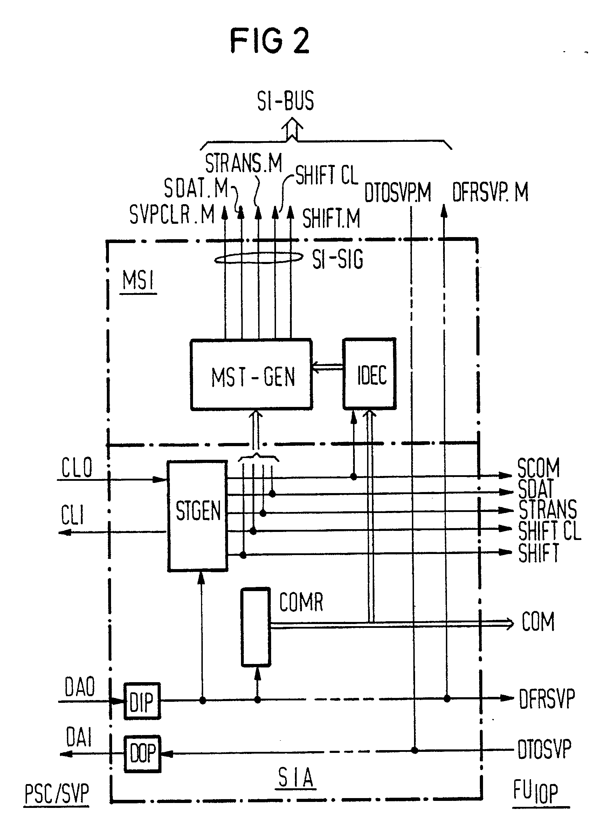

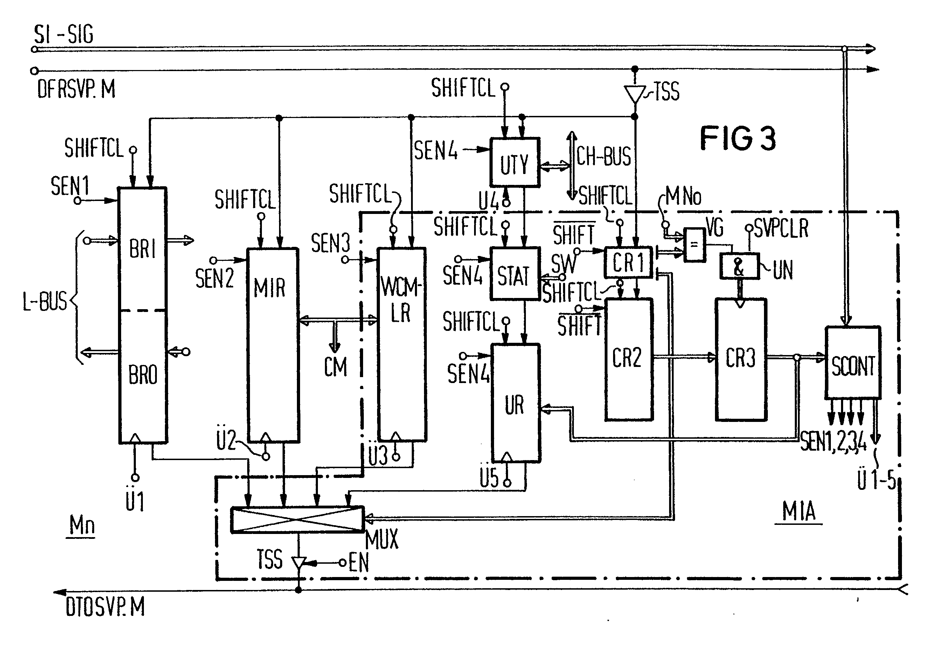

FIG 2 zeigt in Anlehnung an FiG 3 der DE-C3-28 42 603 den prinzipiellen Aufbau des Schnittstellenadapters SIA und des mit diesem gekoppelten Schnittstellenumsetzers MSI für das Wartungsleitungsstem SI-BUS.

Der Schnittstellenanschluß SI benötigt für den eigentlichen Befehls- und Datenaustausch zur Durchführung von Wartungsoperationen wie bei der bekannten Anordnung beispielsweise nur vier Leitungen, nämlich zwei Taktleitungen CLO und CLI und zwei Datenleitungen DAO und DAI für eine bitserielle Datenübertragung in beiden Richtungen, wobei Daten vom Wartungsprozessor SVP über die Datenleitung DAO in Verbindung mit Taktimpulsen auf der Taktleitung CLO und zum Wartungsprozessor SVP auf der Datenleitung DAI in Verbindung mit Taktimpulsen auf der Taktleitung CLI übertragen werden.

Ankommende Daten werden von einer Empfangsschaltung DIP entgegengenommen und abhängig von der Art der Daten an einen Strobeimpulsgenerator STGEN, an ein Befehlsregister COMR oder über die Leitung DFRSVP an die interne Schnittstelle FIF zur zugehörigen Funktionseinheit $FU_{IOP}$ weitergeleitet, während von der internen Schnittstelle FIF über die Leitung DTOSVP angelieferte Daten einer Sendeschaltung DOP für die Schnittstellenleitung DAI zum Wartungsprozessor SVP zugeleitet werden.

Abhängig von den empfangenen Daten werden in Verbindung mit den Taktimpulsen CLO im Strobeimpulsgenerator STGEN Zustandsflipflops gesetzt und dadurch gesteuert fünf interne Schnittstellensignale SCOM, SDAT, STRANS, SHIFTCL und SHIFT als Strobeimpulse erzeugt, mit folgenden Steuerwirkungen:

SCOM:    Erklärt gegenüber der angeschlossenen Funktionseinheit einen in das Befehlsregister übernommenen Befehl für gültig.

STRANS:  Dient dazu, ein durch einen Wartungsbefehl ausgewähltes Register durch die Funktionseinheit zu laden, damit der Inhalt anschließend an den Wartungsprozessor SVP übertragen werden kann.

SDAT:    Dient dazu, vom Wartungsprozessor in ein Register geladene Daten anschließend parallel in ein ausgewähltes Zielregister der Funktionseinheit zu übertragen.

SHIFTCL: Ermöglicht mit je einem Taktimpuls je Datenbit die bitserielle Eingabe bzw. Ausgabe von Daten in ein bzw. aus einem ausgewählten Register der Funktionseinheit.

SHIFT:   Kennzeichnet die Übertragung von Daten für die angesteuerte Funktionseinheit.

In Auswirkung der Erfindung sind alle Schnittstellenleitungen der internen Schnittstelle FIF zur Funktionseinheit $FU_{IOP}$ parallel zum Schnittstellenumsetzer MSI geführt, der im wesentlichen aus einem Befehlsdecodierer IDEC und einem Strobegenerator MST-GEN besteht. Der Befehlsdecodierer IDEC decodiert bei Vorliegen des Strobeimpulses SCOM den im Befehlsregister COMR enthaltenen Befehl. Bezieht sich dieser auf eine der Untereinheiten M1 bis Mn am Wartungsleitungssystem SI-BUS, dann wird der Strobegenerator MST-GEN wirksam geschaltet, der die zugeführten Strobeimpulse lediglich verstärkt weiterleitet, unterdrückt oder davon abgeleitet neue Strobeimpulse erzeugt, was vom ausgewerteten Befehl und dem Fortgang der Daten- und Informationsübertragung abhängig ist, wie später noch erläutert werden wird.

Der Strobeimpulsgenerator MST-GEN liefert ähnlich dem Strobegenerator STGEN des Schnittstellenadapters SIA ebenfalls fünf verschiedene Schnittstellensignale, von denen die gleichbezeichneten die bereits erläuterte Steuerwirkung haben. Lediglich das Schnittstellensignal SCOM ist durch das neue Schnittstellensignal SVPCLR ersetzt. Es entspricht im Prinzip dem Schnittstellensignal SDAT, wobei ein angelieferter Strobeimpuls entweder als Schnittstellensignal SDAT.M oder aber als Schnittstellensignal SVPCLR.M weitergeleitet wird. Der Umfang des Wartungsleitungssystems SI-BUS kann damit auf zwei Datenleitungen DFRSVP.M und DTOSVP.M sowie die fünf Steuerleitungen SVPCLR.M, SDAT.M, STRANS.M, SHIFTCL.M und SHIFT.M beschränkt werden, wodurch bis auf die zusätzlichen Befehlsleitungen COM der internen Schnittstelle FIF zur angeschlossenen Funktionseinheit weitgehende Übereinstimmung und damit die Voraussetzung für eine analoge Arbeitsweise auch des Wartungsleitungssystems SI-BUS gegeben ist.

Bevor jedoch auf die durch die fehlenden Befehlsleitungen COM bedingte notwendige Änderung der Operationseinläufe eingegangen wird, sei zunächst anhand von FIG 3 der Aufbau eines Wartungsadapters MIA in einer der Untereinheiten M1 bis Mn erläutert. Kernstück dieses Wartungsadapters MIA sind zwei Steuerregister CR1/CR2 und CR3. Das erste, als Schieberegister ausgebildete Register CR1/CR2 ist mit seinem Schiebeeingang über einen Empfangsverstärker TSS mit der ankommenden Datenleitung DFRSVP.M gekoppelt. Er übernimmt, gesteuert durch die Schiebeimpulse SHIFTCL, immer dann vom Wartungsprozessor SVP gesendete Daten, wenn gleichzeitig das Schnittstellensignal SHIFT = 0 vorliegt. Auf diese Weise ist es möglich, im Rahmen einer Datensendung einen Wartungsbefehl vom Wartungsprozessor SVP zu übernehmen, der dann wie die Befehlsleitungen COM der internen Schnittstelle FIF am Schnittstellendapter SIA die für eine Wartungsoperation notwendigen Steuerangaben für die interne Steuerung der zugehörigen Untereinheit liefert.

Um dabei die Wartungsinformationen, die zunächst in allen Untereinheiten M1 bis Mn am Wartungsleitungssystem SI-BUS aufgenommen werden, einer vorgegebenen Untereinheit zuordnen zu können, enthalten die im Register CR1/CR2 gespeicherten Steuerbits an vorgegebener Stelle die Nummer oder Adresse der auszuwählenden Untereinheit. Diese mitgelieferte Nummer wird durch einen Vergleicher anhand der zugehörigen, zum Beispiel durch Verdrahtung festgelegten Nummer MNO überprüft. Besteht Gleichheit, wird über ein UND-Glied UN mit einem nachfolgenden Strobeimpuls SVPCLR die Übernahme der notwendigen Steuerbits in das Register CR3 ausgelöst, die damit für die interne Steuerung der Untereinheit gültig werden.

Neben diesen für die Befehlsübernahme wichtigen Steuerregistern sind innerhalb des Wartungsadapters MIA zum Beispiel noch weitere Register vorgesehen, zum Beispiel ein Umladeregister UR, um den Inhalt des Steuerregisters CR3 an den Wartungsprozessor SVP senden zu können, ein Statusregister STAT, das mit einem Statuswort SW geladen werden kann, und ein Laderegister WCM-LR für den nicht gezeigten Mikrobefehlsspeicher WCM, um Mikrobefehle vom Wartungsprozessor in den Mikrobefehlsspeicher laden zu können. Weiterhin gezeigt sind einige weitere Funktionsregister der Untereinheit Mn, die den Verkehr über das allgemeine Leitungssystem L-BUS abwickelnden Register BRI und BRO, das Befehlsregister MIR, das aus dem Befehlsspeicher WCM gelesene Befehle übernimmt, und ein weiteres Umladeregister UTY, um den Anschluß an ein internes Leitungssystem CH-BUS herstellen zu können. Letzteres ist beispielsweise mit den Registern STAT und UR zum Verschieben der Dateninhalte in Serie geschaltet.

Die Register bzw. Registerketten BRI/BRO, MIR, WCM-LR und UTY/STAT/UR sind gleichfalls über die ankommende Datenleitung DFRSVP.M des Wartungsleitungssystems SI-BUS seriell ladbar. Ebenso sind die Serienausgänge dieser Register bzw. Registerketten über einen Auswahlschalter MUX wahlweise zur abgehenden Datenleitung DTOSVP.M über einen Sendeverstärker TSS durchschaltbar. Dieser Auswahlschalter MUX wird anhand von im Steuerregister CR1/CR2 bereitgestellten Steuerbits jeweils eingestellt.

Die Steuersignale für die einzelnen Register werden, soweit sie nicht von den übertragenen Schnittstellensignalen SI-SIG direkt ableitbar sind, wie die Signale SVPCLR, SHIFTCL und $\overline{SHIFT}$, von der Steuereinrichtung SCONT geliefert, die die Steuerbits des Registers CR3 und die Schnittstellensignale SI-SIG dazu verwendet.

Mit den Steuersignalen SEN1 bis SEN4 werden beispielsweise anhand der Steuerbits im Register CR3 in Verbindung mit dem Schnittstellensignal SHIFT = 1 die einzelnen Register zum Empfang und zum Aussenden von Daten auf den Schiebebetrieb umgeschaltet, so daß über die Datenleitung DFRSVP.M gelieferte Daten in ein ausgewähltes Register übernommen oder Daten aus diesem herausgeschoben und an die Datenleitung DTOSVP.M übergeben werden können. Den Schiebevorgang steuern dabei die Schiebeimpulse SHIFTCL. Durch das Schnittstellensignal SHIFT ist damit in einfacher Weise ein Umsteuern auf Befehlsempfang oder Datenempfang möglich.

Mit den Steuersignalen Ü1 bis Ü5 der Steuereinrichtung SCONT werden intern bereitstehende Daten in durch Steuerbits des Steuerregisters CR3 ausgewählte Register in Verbindung mit dem Schnittstellensignal STRANS übernommen, um sie nachfolgend an die Datenleitung DTOSVP.M weiterleiten zu können. Umgekehrt werden, was nicht näher dargestellt ist, in analoger Weise mit dem Schnittstellensignal SDAT Übernahmeimpulse ausgelöst, um vom Wartungsprozessor SVP in eines der Schieberegister geladene Daten anschließend wirksam werden zu lassen oder in ein Zielregister übergeben zu können, zum Beispiel einen in das Laderegister WCM-LR geladenen Mikrobefehl in den Mikrobefehlsspeicher WCM.

Die vom Wartungsprozessor SVP auf dem Wartungsleitungssystem SI-BUS auszulösenden Operationen, mit denen der Wartungsprozessor SVP alle üblichen Wartungsfunktionen abwickeln kann, sind folgende:

    1. Laden Steuerregister CR,

    2. Übertragen von Daten vom Wartungsprozessor zu einer Untereinheit,

    3. Übertragen von Daten von einer Untereinheit zum Wartungsprozessor.

Die entsprechenden Befehle werden in üblicher Weise jeweils als erste Befehlssendung an den Schnittstellenadapter SIA übertragen und ausgewertet, was zur Aktivierung des Wartungsleitungssystems SI-BUS durch den Schnittstellenumsetzer MSI führt, so daß nachfolgende Daten- oder Leerrahmensendungen über das Wartungsleitungssystem SI-BUS weitergeleitet werden. Auf den Befehl "Laden Steuerregister CR" folgt immer eine Datensendung, die aber keine Daten, sondern von den Steuerregistern CR1/CR2 in einer ausgewählten Untereinheit aufzunehmende Steuerinformationen enthält. Die eigentliche Datenübertragung zu oder von einer Untereinheit setzt also immer die Durchführung der Operation "Lade Steuerregister CR" voraus.

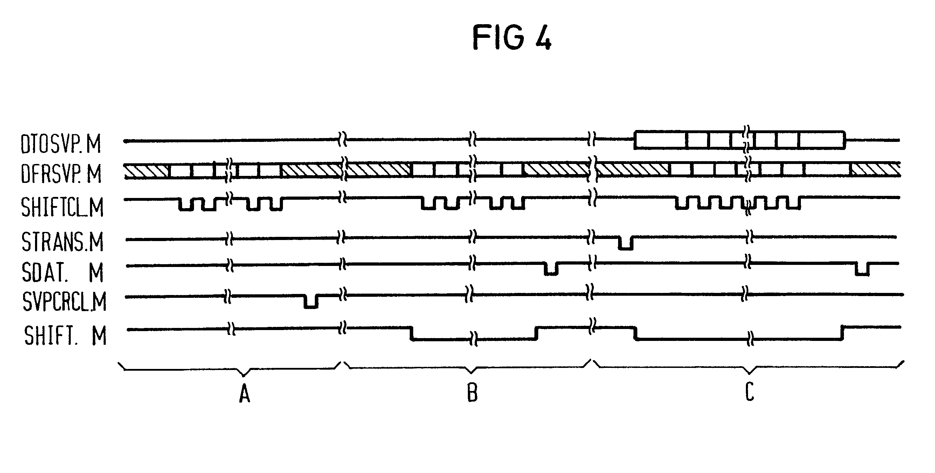

FIG 4 zeigt ein entsprechendes Impulsdiagramm für die Signale auf den Leitungen des Wartungsleitungssysems SI-BUS beim Laden der Steuerregister CR1/CR2 (Phase A), beim anschließenden Übertragen von Daten zu der ausgewählten und vorbereiteten Untereinheit (Phase B) und schließlich beim Abrufen von Daten aus einer Untereinheit (Phase C). Als erstes werden auf der Datenleitung DFRSVP.M seriell die die Steuerinformation beinhaltenden Datenbits übertragen, wobei jedes Datenbit von einem Schiebeimpuls SHIFTCL begleitet wird. Am Ende dieser Datenbitserie folgt dann der Übernahmeimpuls SVPCLR anstelle des üblichen Datenübernahmeimpulses SDAT. Das Schnittstellensignal SHIFT ist in diesem Falle gleich logisch "0".

Die anschließende echte Datenübertragung wird dann durch das Schnittstellensignal SHIFt = 1 gekennzeichnet und mit einem Datenübernahmeimpuls SDAT abgeschlossen, der die Übernahme der Daten in ein angeschlossenes Zielregister oder zum Beispiel beim Laden des Befehlsregisters MIR in FIG 3 mit einem Mikrobefehl die Ausführung dieses Befehls freigibt. Die Datenleitung DTOSVP.M zum Wartungsprozessor SVP ist in diesem Falle gesperrt und zum Beispiel hochohmig geschaltet.

Sollen dagegen Daten aus einer vorbereiteten Untereinheit abgerufen werden, dann wird die Übertragungssequenz mit einem Steuerimpuls STRANS eröffnet, mit dem die Daten eines ausgewählten Quellenregisters gegebenenfalls erst in eines der Schieberegister geladen werden. Nach dem Übergang des Schnittstellensignals SHIFT von logisch "0" auf logisch "1" wird dann die eigentliche Übertragung mit Hilfe der Schiebeimpulse SHIFTCL vorgenommen und mit jedem Schiebeimpuls ein Datenbit auf die Datenleitung DTOSVP.M gegeben. Durch eine Rückkopplung im Schnittstellenadapter SIA, wie sie in der DE-C3-2842603 beschrieben ist, können diese Datenbits auf der Datenleitung DFRSVP.M wieder zum Ursprungsregister zurückgeleitet werden, so daß nach Beendigung des Schiebevorganges die übertragene Information in diesem weiter verfügbar ist. Abschließend folgt dann nochmals ein Übernahmeimpuls SDAT, der aber in den meisten Fällen ohne Auswirkung ist.

Aufgrund der beschriebenen Steuerung ist es auch ohne weiteres möglich, mit mehreren aufeinanderfolgenden Operationen "Lade Steuerregister CR" für verschiedene Untereinheiten diese nacheinander auszuwählen und vorzubereiten, so daß mit einer einzigen weiteren Ladeoperation korrespondierende Register aller ausgewählten Untereinheiten gleichzeitig mit denselben Daten geladen werden können. Auf diese Weise können beispielsweise die Mikrobefehlsspeicher WCM aller gleichartigen Untereinheiten gleichzeitig mit denselben Programmen geladen werden. Auch kann nach dem Laden der Mikrobefehlsspeicher durch entsprechende Überleitung in den Prüfzustand für den Mikrobefehlsspeicher in allen Untereinheiten gleichzeitig dazu übergegangen werden, die geladenen Mikrobefehle nacheinander intern zu lesen und auf richtige Parität zu prüfen. Während dieser Prüfung erkannte und in Registern abgespeicherte Paritätsfehler können dann als Daten nacheinander von den einzelnen Untereinheiten abgerufen und vom Wartungsprozessor SVP daraufhin überprüft werden, ob das Urladen der Mikrobefehlsspeicher erfolgreich verlaufen ist.

**Patentansprüche**

1. Datenverarbeitungsanlage mit mehreren Funktionseinheiten (FU...), die über gleichartige Schnittstellenanschlüsse (SI) mit einem Wartungsprozessor (SVP) zur Steuerung von Wartungsoperationen verbunden sind, wobei in jeder Funktionseinheit (zum Beispiel $FU_{IOP}$) ein ebenso einheitlich ausgebildeter Schnittstellenadapter (SIA) als Umcodierer und Zwischenspeicher zwischen dem jeweiligen Schnittstellenanschluß (SI) und der internen Schnittstelle (FIF) zur Funktionseinheit ($FU_{IOP}$) vorgesehen ist,
   **dadurch gekennzeichnet,** daß zum Anschluß von mit einer der Funktionseinheiten (zum Beispiel $FU_{IOP}$) zusammenarbeitenden Untereinheiten (zum Beispiel Ein-/Ausgabeeinheiten MI bis Mn) an den Schnittstellenadapter (SIA) der Funktionseinheit ($FU_{IOP}$) die Schnittstellenleitungen der internen Schnittstelle (FIF) zur Funktionseinheit parallel dazu mit einem gesonderten Schnittstellenumsetzer (MSI) verbunden sind und daß an den Schnittstellenumsetzer (MSI) ein gesondertes gemeinsames Wartungsleitungssystem (SI-BUS) angeschlossen ist, das über in den einzelnen Untereinheiten (MI bis Mn) vorgesehene Wartungsadapter (MIA) eine Verbindung zwischen dem Wartungsprozessor (SVP) und den einzelnen Untereinheiten (MI bis Mn) zur direkten Ausführung von Wartungsoperationen wie mit den einzelnen Funktionseinheiten (FU..) ermöglicht.

2. Datenverarbeitungsanlage nach Anspruch 1,
   **dadurch gekennzeichnet,** daß der Schnittstellenumsetzer (MSI) einen die vom Schnittstellenadapter (SIA) empfangenen Steuerbefehle auswertenden Befehlsdecodierer (IDEC) und einen damit gekoppelten Strobeimpulsgenerator (MST-GEN) aufweist, der bei Befehlen, die über das Wartungsleitungssytem (SI-BUS) erreichbare Untereinheiten (MI bis Mn) betreffen, die vom Schnittstellenadapter (SA) für die interne Schnittstelle (FIF) der zugehörigen Funktionseinheit ($FU_{IOP}$) erzeugten Strobeimpulse (SCOM, SDAT, STRANS, SHIFTCL, SHIFT) unmittelbar über entsprechende Signalleitungen (SI-SIG) des Wartungsleitungssystems (SI-BUS) weiterleitet, unterdrückt und/oder davon abgeleitete Strobeimpulse (zum Beispiel SVPCLR) erzeugt, während die Datenleitungen (zum Beispiel DFRSVP und DTOSVP) unmittelbar zum Wartungsleitungssystem (SI-BUS) durchgeschleift sind.

3. Datenverarbeitungsanlage nach Anspruch 1 und 2,
   **dadurch gekennzeichnet,** daß die Wartungsadapter (MIA) in den einzelnen Untereinheiten (MI bis Mn) wenigstens zwei Steuerregister (CR1/CR2 und CR3) aufweisen, von denen das erste (CR1/CR2) seriell über die ankommende Datenleitung (DFRSVP.M) abhängig von den über die Steuerleitungen (SI-SIG) empfangenen Stroboimpulsen (SHIFTCL, SHIFT) zur Entgegennahme von Steuerbefehlen ladbar ist, während das zweite Register (CR3) mit den Parallelausgängen eines Teiles des ersten Steuerregisters (CR2) zur Übernahme eines empfangenen Steuerbefehles gekoppelt ist und daß die Übernahme in das zweite Steuerregister (CR3) abhängig von einem Auswahlsignal für die zugehörige Untereinheit (zum Beispiel Mn) und einem über das Wartungsleitungssystem (SI-BUS) gelieferten Befehlsübernahmeimpuls (SVPCLR) erfolgt, der im Schnittstellenumsetzer (MSI) vom zugeführten, aber unterdrückten Datenübernahmeimpuls (SDAT) abgeleitet wird.

4. Datenverarbeitungsanlage nach Anspruch 3,
   **dadurch gekennzeichnet,** daß das Auswahlsignal abhängig von der Übereinstimmung einer im Befehl mitgelieferten Nummer der auszuwählenden Untereinheit (zum Beispiel Mn) und der in jeder Untereinheit verfügbaren Nummer (MNO) ableitbar ist.

5. Datenverarbeitungsanlage nach Anspruch 3 oder 4,
   **dadurch gekennzeichnet,** daß neben den Steuerregistern (CR1/CR2 und CR3) weitere als Schieberegister umschaltbare Register, die Bestandteil des Wartungsadapters (MIA) oder Funktionsregister der Untereinheit (zum Beispiel Mn) vorgesehen sind, mit der ankommenden seriellen Datenleitung (DFRSVP.M) des Wartungsleitungssystems (SI-BUS) verbunden sind und daß diese Register von einer die zugehörigen Steuersignale (SI-SIG) auswertenden und mit den Ausgängen des zweiten Steuerregisters (CR3) gekoppelten Steuereinrichtung (SCONT) befehlsabhängig auswählbar und zur Übernahme bzw. Abgabe von Daten als Schieberegister umschaltbar sind.

6. Datenverarbeitungsanlage nach Anspruch 5,
   **dadurch gekennzeichnet,** daß alle über die ankommende Datenleitung (DFRSVP.M) ladbaren Register mit ihrem Schiebeausgang über einen Auswahlschalter (MUX) mit der abgehenden Datenleitung (DTOSVP.M) des Wartungsleitungssystems (SI-BUS) verbindbar sind, wobei die Einstellung des Auswahlschalters (MUX) von im ersten Steuerregister (CR1/CR2) enthaltenen Steuerbits abhängig ist.

7. Datenverarbeitungsanlage nach Anspruch 5 und 6,
   **dadurch gekennzeichnet,** daß eines der über den Auswahlschalter (MUX) mit der abgehenden Datenleitung (DTOSVP.M) verbindbaren Register (UR) des Wartungsadapters (MIA) jeder Untereinheit (zum Beispiel Mn) über einen paralallen Verbindungsweg mit dem Parallelausgang des zweiten Steuerregisters (CR3) zur Übernahme des Registerinhalts zwecks Weiterleitung an den Wartungsprozessor (SVP) verbunden ist.

8. Verfahren zur Durchführung von Wartungsoperationen für über das Wartungsleitungssystem (SI-BUS) einer Datenverarbeitungsanlage nach einem der Ansprüche 1 bis 7 erreichbare Steueruntereinheiten (MI bis Mn)
   **dadurch gekennzeichnet,** daß in an sich bekannter Weise über den Schnittstellenanschluß (SI) zur zugehörigen Funktionseinheit (zum Beispiel FU$_{IOP}$) eine vom dortigen Schnittstellenadapter (SIA) auszuwertende Befehlssendung erfolgt, die einen vom Befehlsdecodierer (IODEC) des Schnittstellenumsetzers (MSI) auswertbaren vorgegebenen Befehl enthält und daß aufgrund eines solchen Befehls eine nachfolgende Daten- oder Leerrahmensendung an das Wartungsleitungssystem (SI-BUS) mit den dazugehörigen Stroboimpulsen weitergeleitet wird.

9. Verfahren nach Anspruch 8, **dadurch gekennzeichnet,** daß mit einer ersten Befehls- und Datensendung die ersten Steuerregister (CR1/CR2) aller Untereinheiten (MI bis Mn) mit den Daten der Datensendung geladen werden, daß durch einen die Datensendung beendenden Übernahmeimpuls (SVPCLR) die Daten in der als Empfänger bestimmten Untereinheit (zum Beispiel Mn) in das zweite Steuerregister (CR3) übernommen und der Steuerung dieser Untereinheit zur entsprechenden Reaktion zugeführt werden und daß entweder mit einer nachfolgenden zweiten Befehlssendung die mit einer anschließenden Datensendung gekoppelt ist, die Daten in ein durch die erste Befehls- und Datensendung vorbestimmtes Register der von der ersten Befehls- und Datensendung ausgewählten Steuereinheit übertragen werden oder aber mit einer zweiten Befehlssendung, die mit einer anschließend Leerrahmensendung gekoppelt ist, die in einem durch die erste Befehls- und Datensendung vorbestimmten Register enthaltenen Daten gelesen und zum Wartungsprozessor (SVP) übertragen werden.

10. Verfahren nach Anspruch 9,
    **dadurch gekennzeichnet,** daß zunächst mit einer Folge von ersten Befehls- und Datensendungen des Wartungsprozessors (SVP) eine Reihe von Steuereinheiten (MI bis Mn) für die Aufnahme von nachfolgend zu sendenden Daten ausgewählt und vorbereitet werden und daß nachfolgend mit einer einzigen zweiten Befehls- und Datensendung die miteinander korrespondierenden vorbereiteten Register (zum Beispiel MIR) in den ausgewählten Steuereinheiten (MI bis Mn) gleichzeitig parallel mit den Daten der zweiten Datensendung geladen werden.

## Claims

1. Data processing System having a plurality of function units (FU...) which are connected via interface connections (SI) of the same kind to a maintenance processor (SVP) for controlling maintenance operations, an interface adaptor (SIA) which is likewise of uniform design being provided in each function unit (for example FU$_{IOP}$) as a recoder and buffer between the respective interface connection (SI) and the internal interface (FIF) to the function unit (FU$_{IOP}$), characterised in that, for the purpose of connecting subunits, (for example input/output units MI to Mn), which cooperate with one of the function units (for example FU$_{IOP}$), to the interface adaptor (SIA) of the function unit (FU$_{IOP}$), the interface lines of the internal interface (FIF) to the function unit are connected parallel thereto to a separate interface converter (MSI), and in that a separate, common maintenance bus system (SI-BUS) is connected to the interface converter (MSI), which maintenance bus system (SI-BUS) permits a connection, via maintenance adaptors (MIA) provided in the individual subunits (MI to Mn), between the maintenance processor (SVP) and the individual subunits (MI to Mn) for the direct execution of maintenance operations as with the individual function units (FU..).

2. Data processing system according to Claim 1, characterised in that the interface converter (MSI) has an instruction decoder (IDEC) which evaluates the control instructions received by the interface adaptor (SIA) and a strobe pulse generator (MST-GEN) connected thereto, which strobe pulse generator (MST-GEN), in the case of instructions which relate to sub-units (MI to Mn) which can be reached via the maintenance bus system (SI-BUS), passes on and suppresses the strobe pulses (SCOM, SDAT, STRANS, SHIFTCL, SHIFT), generated by the interface adaptor (SA) for the internal interface (FIF) of the associated function unit (FU$_{IOP}$) directly via corresponding signal lines (SI-SIG) of the maintenance bus system (SI-BUS), and/or generates strobe pulses (for example SVPCLR) derived therefrom, whilst the data lines (for example DFRSVP and DTOSVP) are looped through directly to the maintanance bus system (SI-BUS).

3.  Data processing system according to Claim 1 and 2, characterised in that the maintenance adaptors (MIA) in the individual subunits (MI to Mn) have at least two control registers (CR1/CR2 and CR3), of which the first (CR1/CR2) can be loaded serially via the incoming data line (DFRSVP.M) in dependence on the strobe pulses (SHIFTCL, SHIFT) received via the control lines (SI-SIG), in order to accept control instructions, whilst the second register (CR3) is connected to the parallel outputs of a part of the first control register (CR2) for the transfer of a received control instruction, and in that the transfer into the second control register (CR3) occurs in dependence on a selection signal for the associated subunit (for example Mn) and a control transfer pulse (SVPCLR) supplied via the maintenance bus system (SI-BUS), which instruction transfer pulse (SVPCLR) is derived in the interface converter (MSI) of the fed-in, but suppressed data transfer pulse (SDAT).

4.  Data processing system according to Claim 3, characterised in that the selection signal can be derived in dependence on the coincidence of a number, also supplied in the instruction, of the subunit (for example Mn) to be selected and the number (MNO) available in each subunit.

5.  Data processing system according to Claim 3 or 4, characterised in that, in addition to the control registers (CR1/CR2 and CR3), further registers which can be switched over as shift registers and which are components of the maintenance adaptor (MIA) or function register of the subunit (for example Mn) are provided, and connected to the incoming serial data line (DFRSVP.M) of the maintenance bus system (SI-BUS), and in that these registers can be selected in an instruction-dependent manner by a control device (SCONT) which evaluates the associated control signals (SI-SIG) and is connected to the outputs of the second control register (CR3), and can be switched over to receive or transmit data as a shift register.

6.  Data processing system according to Claim 5, characterised in that all of the registers which can be loaded via the incoming data line (DFRSVP.M) can be connected with their shift output via a selection switch (MUX) to the outgoing data line (DTOSVP.M) of the maintenance bus system (SI-BUS), the setting of the selection switch (MUX) being dependent on control bits contained in the first control register (CR1/CR2).

7.  Data processing system according to Claim 5 and 6, characterised in that one of the registers (UR), which can be connected via the selection switch (MUX) to the outgoing date line (DTOSVP.M), of the maintenance adaptor (MIA) is connected to each subunit (for example Mn) via a parallel connection path to the parallel output of the second control register (CR3) for the transfer of the register contents for the purpose of passing them on to the maintenance processor (SVP).

8.  Method for carrying out maintenance operations for control subunits (MI to Mn) which can be reached via the maintenance bus system (SI-BUS) of a data processing system according to one of Claims 1 to 7, characterised in that via the interface connection (SI) to the associated function unit (for example FU$_{IOP}$), an instruction transmission, which is to be evaluated by the interface adaptor (SIA) there, occurs in a manner known per se, which instruction transmission contains a predetermined instruction which can be evaluated by the instruction decoder (IODEC) of the interface converter (MSI), and in that, on the basis of such an instruction, a subsequent data-frame or empty-frame transmission is passed on to the maintenance bus system (SI-BUS) with the associated strobe pulses.

9.  Method according to Claim 8, characterised in that with a first instruction and data transmission the first control registers (CR1/CR2) of all the subunits (MI to Mn) are loaded with the data of the data transmission, in that, by means of a transfer pulse (SVPCLR) terminating the data transmission, the data in the subunit (for example Mn) specified as receiver are transferred into the second control register (CR3) and are fed to the control of this subunit for the corresponding reaction, and in that either with a subsequent second instruction transmission which is connected to a following data transmission, the data are transmitted into a register, predetermined by the first instruction and data transmission, of the control unit selected by the first instruction and data transmission, or else with a second instruction transmission which is connected to a following empty-frame transmission, the data contained in a register predetermined by the first instruction and data transmission are read and transmitted to the maintenance processor (SVP).

10. Method according to Claim 9, characterised in that, initially with a sequence of first instruction and data transmissions of the maintenance processor (SVP), a series of control units (MI to Mn) for the acceptance of data to be transmitted subsequently is selected and prepared, and in that subsequently, with a single second instruction and data transmission, the prepared registers which correspond to one another (for example MIR) are simultaneously loaded in the selected control units (MI to Mn) in parallel with the data of the second data transmission.

**Revendications**

1. Installation de traitement de données comportant plusieurs unités fonctionnelles (FU...), qui sont raccordées par l'intemédiaire de bornes identiques d'interface (SI) à un processeur de maintenance (SVP) pour la commande d'opérations de maintenance, et dans laquelle il est prévu, dans chaque unité fonctionnelle (par exemple FU$_{IOP}$), un adaptateur d'interface (SIA) également agencé de façon uniforme, en tant que transcodeur et mémoire intermédiaire entre la borne respective d'interface (SI) et l'interface interne (FIF) de liaison à l'unité fonctionnelle (FU$_{IOP}$),caractérisée par le fait que, pour le raccordement d'unités secondaires (par exemple des unités d'entrée/sortie MI à Mn), qui coopèrent avec l'une des unités fonctionnelles (par exemple FU$_{IOP}$), à l'adaptateur d'interface (SIA) de l'unité fonctionnelle (FU$_{IOP}$), les lignes de l'interface interne (FIF) aboutissant à l'unité fonctionnelle sont raccordées, en parallèle avec cette dernière, à un convertisseur particulier d'interface (MSI), et qu'au convertisseur d'interface (MSI) est raccordé un système commun particulier de lignes de maintenance (SI-BUS), qui permet, par l'intermédiaire d'adaptateurs de maintenance (MIA) prévus dans les différences unités secondaires (MI à Mn), une liaison entre le processeur de maintenance (SVP) et les différentes unités secondaires (MI à Mn) pour l'exécution directe d'opérations de maintenance, comme avec les différentes unités fonctionnelles (FU...).

2. Installation de traitement de données suivant la revendication 1, caractérisée par le fait que le convertisseur d'interface (MSI) comporte un décodeur d'instructions (IDEC), qut évalue les instructions de commande reçues par l'adaptateur d'interface (SIA), et un générateur d'impulsions d'échantillonnage (MST-GEN) accouplé à ce décodeur d'instructions et qui, dans le cas d'instructions concernant des unités secondaires (MI à Mn) pouvant être atteintes par l'intermédiaire du système de lignes de maintenance (SI-BUS), retransmet directement, par l'intermédiaire de lignes correspondantes de transmission de signaux (SI-SIG) du système de lignes de maintenance (SI-BUS), ou supprime les impulsions d'échantillonnage (SCOM, SDAT, STRANS, SHIFTCL, SHIFT) produites par l'adaptateur d'interface (SA) pour l'interface interne (FIF) de l'unité fonctionnelle associée (FU$_{IOP}$), et/ou produit des impulsions d'échantillonnage (par exemple SVPCLR) dérivées des impulsions d'échantillonnage précédentes, tandis que les lignes de transmission de données (par exemple DFRSVP et DTOSVP) sont raccordées en boucle directement au système de lignes de maintenance (SI-BUS).

3. Installation de traitement de données suivant les revendications 1 et 2, caractérisée par le fait que les adaptateurs de maintenance (MIA) situés dans les unités secondaires individuelles (MI à Mn), possèdent au moins deux registres de commande (CR1/CR2 et CR3), dont le premier (CR1,CR2) peut être chargé en série par l'intermédiaire de la ligne de données arrivantes (DFRSVP.M), en fonction des impulsions d'échantillonnage (SHIFTCL, SHIFT), reçues par l'intermédiaire des lignes de commande (SI-SIG), pour la réception d'instructions de commande, tandis que le second registre (CR3) est accouplé aux sorties parallèles d'une partie du premier registre de commande (CR2) pour la prise en charge d'une instruction de commande reçue, et que le transfert dans le second registre de commande (CR3) s'effectue en fonction d'un signal de sélection pour l'unité secondaire associée (par exemple Mn) et d'une impulsion (SVPCLR) de transfert d'instructions, qui est délivrée par l'intermédiaire du système de lignes de maintenance (SI-BUS) et est dérivée, dans le convertisseur d'interface (MSI), de l'impulsion envoyée de transfert de données (SDAT), mais qui est supprimée.

4. Installation de traitement de données suivant la revendication 3, caractérisée par le fait que le signal de sélection peut être obtenu en fonction de l'identité entre un numéro, transmis simultanément dans l'instruction, de l'unité secondaire devant être sélectionnée (par exemple Mn) et le numéro (MNO) disponible dans chaque unité secondaire.

5. Installation de traitement de données suivant la revendication 3 ou 4, caractérisée par le fait qu'en dehors des registres de commande (CR1/CR2 et CR3), il est prévu d'autres registres pouvant être commutés en tant que registres à décalage et qui font partie de l'adaptateur de maintenance (MIA), ou des registres de fonctions de l'unité secondaire (par exemple Mn), et qui sont raccordés à la ligne de transmission de données en série arrivantes (DFRSVP.M) du système de lignes de maintenance (SI-BUS), et que ces registres peuvent être sélectionnés, en fonction d'instructions, par un dispositif de commande (SCONT) qui évalue les signaux de commande associés (SI-SIG) et est accouplé aux sorties du second registre de commande (CR3), et peuvent être commutés en tant que registres à décalage pour la réception et la délivrance de données.

6. Installation de traitement de données suivant la revendication 5, caractérisée par le fait que tous les registres pouvant être chargés par l'intermédiaire de la ligne de transmission de données d'arrivée (DFRSVP.M), peuvent être raccordés par leurs sorties de transfert, par l'intermédiaire d'un commutateur de multiplexage (MUX), à la ligne de transmission de données de départ (DCOSVP.M) du système de lignes de maintenance (SI-BUS), le réglage du commutateur de sélection (MUX) dépendant de bits de commande contenus dans un premier registre de commande (CR1/CR2)

7. Installation de traitement de données suivant les revendications 5 et 6, caractérisée par le fait que l'un des registres (UR) de l'adaptateur de maintenance (MIA) de chaque unité secondaire (par exemple Mn), qui peut être raccordé au moyen du commutateur de sélection (MUX) à la ligne de transmission de données de départ (DTOSVP.M), est raccordé, par l'intermédiaire d'une voie parallèle de transmission, à la sortie en parallèle du second registre de commande (CR3) pour le transfert du contenu du registre an vue de sa retransmission au processeur de maintenance (SVP).

8. Procédé pour l'exécution d'opérations de maintenance pour des unités secondaires de commande (MI à Mn), pouvant être atteintes par l'intermédiaire du système de lignes de maintenance (SI-BUS) d'une installation de traitement de données suivant l'une des revendications 1 à 7, caractérisé par le fait que de façon connue en soi s'effectue, par l'intermédiaire de la borne d'interface (SI) aboutissant à l'unité fonctionnelle associée (par exemple $FU_{IOP}$) une émission d'instructions, qui doit être évaluée par l'adaptateur d'interface (SI) situé dans cette unité et qui contient une instruction prédéterminée pouvant être évaluée par le décodeur d'instructions (IODEC) du convertisseur d'interface (MSI), et que sur la base d'une telle instruction, une émission ultérieure de données ou de trames vides au système de lignes de maintenance (SI-BUS) est exécutée avec les impulsions d'échantillonnage qui y sont associées.

9. Procédé suivant la revendication 8, caractérisé par le fait que les premiers registres de commande (CR1,CR2) de toutes les unités secondaires (MI à Mn) sont chargés, lors de la première émission d'instructions et de données, par les données transmises lors de l'émission de données, que les données situées dans l'unité secondaire déterminée en tant que récepteur (par exemple Mn) sont transférées dans le second registre de commande (CR3) par une impulsion de transfert (SVPCLR) qui arrête l'émission de données, et sont envoyées à l'unité de commande de cette unité secondaire pour produire une réaction correspondante, et que soit lors d'une seconde émission ultérieure d'instructions, qui est couplée à une émission ultérieure de données, les données sont transmises dans un registre, prédéterminé par la première émission d'instructions et de données, de l'unité de commande sélectionnée par la première émission d'instructions et de données, soit lors d'une seconde émission d'instructions, qui est couplée à une émission ultérieure de trames vides, les données contenues dans un registre prédéterminé par la première émission d'instructions et de données sont lues et transmises au processeur de maintenance (SVP).

10. Procédé suivant la revendication 9, caractérisé par le fait qu'au moins avec une suite de premières émissions d'instructions et de données du processeur de maintenance (SVP), une série d'unités de commande (MI à Mn) est sélectionnée et préparée pour la réception de données devant être émises ultérieurement, et qu'ensuite, lors d'une seule seconde émission d'instructions et de données, les registres préparés (par exemple MIR), qui se correspondent, dans les unités de commande sélectionnées (MI à Mn) sont chargés simultanément en parallèle par les données de la seconde émission de données.

FIG 1

EP 0 301 248 B1

# FIG 2

FIG 3

SI –SIG

DFRSVP. M

SHIFTCL    TSS

SEN4 → UTY   CH-BUS

SHIFTCL

SHIFTCL

SEN1

BRI

L-BUS

BRO

Ü1

Mn

SHIFTCL

SEN2   MIR

Ü2

SHIFTCL

SEN3   WCM-LR

CM

Ü3

U4

SHIFTCL

SEN4 → STAT   SW

SHIFTCL

SHIFTCL

SEN4   UR

Ü5

SHIFT

CR1

SHIFTCL

SHIFT

CR2

MNo

VG

SVPCLR

  UN

CR3

SCONT

SEN1,2,3,4

Ü1-5

MIA

MUX

TSS   EN

DTOSVP. M

EP 0 301 248 B1

# FIG 4

EP 0 301 248 B1